# EUROPEAN PATENT SPECIFICATION

(11) **EP 4 498 817 B1**
(45) Date of publication and mention of the grant of the patent: **03.12.2025**
(21) Application number: 23714371.4
(22) Date of filing: 24.03.2023
(51) Int. Cl.: A22C 17/00, B65G 47/14

(54) **DEVICE FOR SEPARATING FOOD PRODUCTS SUPPLIED IN BULK**
VORRICHTUNG ZUM TRENNEN VON IN SCHÜTTGUTFORM BEREITGESTELLTEN LEBENSMITTELPRODUKTEN
DISPOSITIF DE SÉPARATION DE PRODUITS ALIMENTAIRES EN VRAC

(30) Priority: 25.03.2022 NL 2031408
(43) Date of publication of application: 05.02.2025
(73) Proprietor: VIAM s.r.o., 95143 Cakajovce (SK)
(72) Inventor: SIMONS, Renier Theodorus Elisabeth Marie, 6042 LD ROERMOND (NL)
(74) Representative: Majlingová, Zuzana
(86) International application number: PCT/NL2023/050150
(87) International publication number: WO 2023/182886

(56) References cited:
- EP-A1- 2 517 988
- NL-C2- 2 001 506
- US-A- 4 791 705
- US-A1- 2006 141 108

## Description

The invention relates to a device for separating random and bulk supplied food products, such as fresh, fully or partially prepared (meat) products, such as hamburgers, sausages, steak, etc.

The processing of food products such as hamburgers, sausages or other raw or fully or partly prepared food products usually takes place in bulk. This means that the products are supplied in a non-uniform manner for further processing such as preparation or packaging. This may be due to the production process, in which a meat processing machine produces the products in a non-uniform manner. In the context of the present description, uniform means that the products may deviate from each other both in shape and weight, but moreover are not supplied in the same orientation and mutual distance from each other. This makes further processing difficult.

For example, in the case of further processing by preparing the product, such as by an automated robotic kitchen, the preparation will require that the products are not supplied in bulk, but piece by piece. After all, the products will often be prepared piece by piece, processed and served or sold in some other way. Also in the case of packaging, a piece-by-piece supply will often be desirable or even required. With a device for separating bulk goods, such a bulk of products can be processed into one or only a few pieces, making possible a further piece-wise or group-wise supply downstream in the line.

Currently known devices or singulators, however, have various drawbacks and are often not suitable for singling the products in a simple, efficient manner. In addition, the processing of food products such as meat is subject to strict regulations regarding food safety and hygiene. However, many currently known singulators are not suitable for these purposes.

US4794705A discloses a machine for meat treatment and maceration, with automatic loading and unloading including a rotating drum having a loading and unloading hood inlet coaxial with the axis of rotation in one end, a door with fitting and locking devices for closing the drum hood inlet, driving and rolling support elements for driving and supporting the drum on a tilting frame for lifting and lowering one end of the drum articulated at the other end on a fixed structure, and a series of containers surrounding the drum.

US 2006/141108A1 discloses a tumbler and a method for treating meat before cooking, where the tumbler comprising a light-weight chamber securely and rotatably mountable on a support, and is designed to allow dismantling of the chamber from the tumbler by a typical housekeeper.

EP2417988A1 discloses a device and method for singulating and/or sorting used beverage containers, where the device has an impeller that is rotary mounted, particularly around a horizontal rotational axis. The impeller has blades arranged in its interior or has an outer, particularly cylindrical, wheel, which carries the inwardly directed directly or indirectly.

NL2001506C2 discloses a fasteners packaging device, which has a gutter element collecting objects from drum and moving objects one by one towards end of gutter for disposal of object.

It is therefore an object of the present application to provide a device that can singulate products from bulk for further downstream processing in a single batch or in a small group of a few products, whereby the device can singulate the food products in a simple, robust and efficient manner, and is also able to comply with the applicable regulations regarding food safety and hygiene.

This object is achieved in accordance with claim 1 with a device for singulating food products which are supplied in bulk, such as pre-cooked sausages, comprising:
- a drum arranged for rotation about a horizontally oriented axis of rotation;
- a housing for partially enclosing the drum, which housing is circular and is closed at least at the bottom and is at least partly open for feeding the food products in bulk into the drum, the drum further comprising,
- a plurality of gutters extending on the inside of a circumferential wall of the drum over at least substantially the entire length of the drum, wherein each of the gutters has a width which at least substantially corresponds to the width of the food products to be separated, for ejecting the singulated food products out of the gutters through rotation of the drum.

Delta robots or scara robots are often used in the food industry to separate products from a bulk flow. These robots not only have a complex architecture, but also have many individual components that often include oil or other lubricants or guards that make food safety and maintaining a high level of hygiene a challenge.

The present device, which is also referred to as a singulator in the context of this description, does not have such drawbacks. The singulator according to the present description comprises a rotating drum which resembles a washing machine drum. The drum rotates about an axis of rotation and is arranged in a horizontal orientation at least when the drum is unloaded, i.e. the two circular bases have a vertical orientation and the longitudinal axis of the drum is horizontally oriented.

The drum is contained in a housing that is partly open and partly closed. The device comprises two alternative embodiments where in one embodiment the products are ejected, pushed out or poured out of the circumferential surface of the cylinder wall, while in the other embodiment they are ejected from one of the two circular bases of the cylinder.

In both embodiments, the drum is oriented horizontally, which means that the longitudinal direction of the drum is horizontal. In the first embodiment, in which the products are poured out of the circumferential surface, both side walls, also referred to as base surfaces, are closed and the products are poured into the drum at the top of the housing. In the other embodiment, the products can also be poured into the drum at the top, for which purpose the housing is wholly or partly open at the top. In this embodiment, however, the products can alternatively also be poured into the drum via an open side surface. In this embodiment, therefore, the products are not pushed out of the drum along the circumferential direction, but the products are ejected or pushed out of the drum in the longitudinal direction. For this purpose the device in this embodiment is provided with one or more actuators with which the products are pressed out of the gutters.

The gutters or gutters have a shape that corresponds at least in width to the product to be singulated, so that when the drum rotates, they can take along a single product per gutter from the bulk of products lying at the bottom of the drum. As an alternative, if the drum is longer in relation to the products and in particular concerns a multiple of the products to be singulated, several products can also be taken along from the bulk per gutter. The products herein lie closed one after the other in the gutter because the width of the gutter at least substantially corresponds to the products to be singulated.

The gutter has a cross-section which is at least adapted to carry the products upwards when the drum rotates, and the gutters rotate therewith. To this end, at least on one side directed towards the axis of rotation, the gutter is provided with an upright edge which preferably extends over the entire length of the gutter. The gutter is preferably open on the other side which is remote from the axis of rotation, where it is limited only by the wall of the housing. As soon as the drum with the gutter has therefore rotated in such a way that the gutter has rotated at least substantially 90 degrees from a position at the bottom of the drum, the product can be ejected from the housing there because the wall of the housing ends there, is open or at least partially open. In particular, the housing can be provided there with a slot or other opening which at least substantially corresponds to the width of the product to be singulated. So, for example, if a sausage with a diameter of 15mm is to be singulated, the slot has a height of at least 15mm or slightly more, such as 16mm, 17mm or 18mm. The slot is therefore partly higher than the diameter of the products to be singulated. The position of the slot is circumferentially placed at 90 degrees.

However, the slot or opening can also be temporarily closed because it is provided with a closing element such as a cover plate. This plate can move relative to the housing and can be placed in front of the slot or open position of the housing. In this case that the slot is closed by the plate, the products will be turned through and will end up in the bulk again.

In one embodiment, the gutters or gutters can rotate about a longitudinal axis similar to gondolas in a wheel. This has the advantage that the gutters can always be kept in an upright orientation and the products do not encounter any friction with the gutter during the rotation of the drum.

The gutters are located on the inside of the circumferential wall of the drum, which drum is cut open. This means that it has no walls but ribs or is at least shaped in such a way that the products can be ejected from the gutters as soon as they have rotated 90 degrees about the axis of rotation relative to the deepest point in the bottom of the drum where the bulk goods are located.

The gutters are preferably evenly spaced across the wall. The gutters preferably have a U-shaped or L-shaped cross-section and the distance between the two upright edges of the wall corresponds at least substantially to the width of the products to be singulated. In the case of sausages, therefore, they will have a width which is substantially equal to, but preferably marginally greater than, the width of the sausages. The distance of the gutter is preferably at least 5% wider than the width of the products to be singulated and more preferably between 5% and 50%, more preferably between 10% and 30% and most preferably about 25% .

Because the drum rotates about the rotation or longitudinal axis, the products will automatically be taken up in the gutters and scooped out of the bulk. In the embodiment in which the products are pushed out of the gutters in longitudinal direction, they will be pushed out as soon as the drum is brought to a standstill, i.e. the drum has rotated a segment of 90 degrees or less. This can preferably be done with an actuator and will preferably be done piece by piece, but can also be done simultaneously for more or all products in the gutter.

The drum rotates about a rotational axis and the actuator only needs to make a single linear movement, which enhances the complexity of the singulator. These moving parts can be easily cleaned or shielded, which means that such a singulator can largely comply with strict regulations regarding food safety and hygiene. In an example, the gutters are designed to rotate about a longitudinal axis relative to the drum.

In an example, the housing is partly open at the top for receiving the food products supplied in bulk and the food products are ejected from the housing in a direction transverse to the longitudinal direction of the gutters.

In an example, the housing on one base of the cylindrical housing is completely open for receiving the food products supplied in bulk, the other base of the cylindrical housing is open for singular ejection of the food products in line with the longitudinal direction of the gutters .

In an example, the device further comprises:
- an actuator which is adapted to actively push the singulated food products out of the gutters.

In an example, the drum is arranged to periodically pause rotation, during which pause the actuator can push the singulated food products out of one of the gutters.

In an example, the actuator is arranged to push the singulated food products out of the gutter with a linear movement, in line with the longitudinal direction of the gutter.

In an example, the drum comprises a number of actuators corresponding to the number of gutters, wherein the actuators form part of the gutter and are adapted to rotate with the drum about the axis of rotation, and the actuators are arranged to extend in line with the longitudinal direction of the gutter, pushing the singulated food products out of the gutter with a linear movement.

In an example, the drum is provided with three gutters extending over the length of the drum on the inside of a wall of the drum.

In an example, the housing further comprises a shielding element that is movable relative to the housing, which shielding element can be slid in front of an ejection opening of the housing for blocking the ejection of the separated food products from the gutter.

In a further aspect not forming part of the claimed invention, a gripper is provided for manipulating at least one food product such as meat, the gripper adapted for attachment as an end effector to a manipulator such as a robot arm, comprising:
- a framework adapted to be placed over the at least one food product,
- an actuator for driving a conveyor belt, the conveyor belt being arranged at least on one of the faces of the frame for closing and opening the at least one face by activating the actuator.

Robots in the food industry must meet stricter requirements than robots used for other non-food related applications. Delta robots or three or five-axis scara robots are often used in the food industry. These robots not only have a complex architecture, but also have many individual components that are subject to food safety requirements. That is why lubrication components such as greases and oils, for example, must be shielded. Enforcing the hygiene requirements is therefore challenging.

The inventor has come to the surprising insight that a robot should contain as few moving parts as possible because these are often provided with lubricants that make the hygiene of the robot very difficult for use in the food industry. Because the concept of a robot is that it must be able to manipulate these products, robots will always contain moving components, but these should be kept to a minimum at the discretion of the inventor. The robot according to the present description can be completely shielded except for the end effector because it can be based on magnetic drive. Only the end effector in the form of the gripper comprises open movable elements.

The gripper according to the present description is therefore particularly suitable for handling food products such as meat and is able to pick up and manipulate them and is able to reach various, if not all, coordinates within the working area while only using a limited number of parts of the robot. to move. Most of the robot is stationary and enclosed in the housing. All moving parts that are sensitive to dirt or dust, for example, or that require lubrication, are included in the housing.

The interface between the stationary part of the robot and the moving part formed by the gripper forms a non-contact transmission due to the magnetic interface between the two parts. The inventor has come to the surprising insight that the present design not only comprises few moving parts, but also provides a very hygienic device due to the contactless interface, which is moreover robust and versatile in use.

The gripper is particularly suitable for picking up food products that are difficult to pick up with the gripper that is currently known. This could include products that are not dimensionally stable, or that are soft so that they cannot be grasped easily, or that have a surface that is not suitable for traditional gripping or picking up with a vacuum.

The gripper according to the present description is capable of enclosing food products in a frame or frame. This means that the frame can be placed around or over the product by the manipulator. In this context, a framework is understood to mean a rectangular or square framework of ribs in which none, one or more walls can be fully or partially closed. At least one of the walls, for instance the side wall or the bottom or underside, is wholly or partly open and not provided with a fixed wall part. As a result, the manipulator can bring the food product to be manipulated into the frame via this opening. The opening can be closed because the gripper is further provided with an actuator or several actuators with which a conveyor belt can be driven. This conveyor belt is movable over the opening, so that the opening can be closed by the conveyor belt when the actuator is activated. The conveyor belt is food grade or food safe and the skilled person will be familiar with the materials that meet this requirement. The conveyor belt, also referred to as mat, mat or cloth, is at least flexible and strong enough that the food product can be picked up and manipulated with it. In addition, the conveyor belt has a very low coefficient of friction, which means that food products can move over the belt with low friction. This makes picking up the food products easier because they can easily be pushed under the product.

The gripper according to the present description has two main embodiments, both of which are characterized in that they comprise a removable conveyor belt. In one embodiment, the conveyor belt is pulled over a wall of the frame like a roller blind to open or close an opening. In the other embodiment, the frame consists of several U-shaped elements, with the conveyor belt stretched between the lying parts of the U-shaped elements. By moving the two U-shaped elements towards each other, the conveyor belt can be tightened or relaxed, so that a surface of the frame of the gripper can be closed or opened with the conveyor belt by allowing the two conveyor belts to give way by moving the two conveyor belts towards each other. the two U-shaped elements.

In an example, the conveyor belt is made of flexible food-safe material.

In an example, the conveyor belt is partly open for receiving the food products to be manipulated through the opening, and wherein the opening is in particular partly open over the length but over the entire width, and more particularly comprises several openings.

In an example, the conveyor belt is arranged to be rolled up by the actuator for opening and closing the at least one face of the frame.

In an example, the frame of the first group and the second group both comprise two U-shaped elements, with the conveyor belt fixed between the two U-shaped elements of both groups and at least one of the two U-shaped elements leading to the other. of the two U-shaped elements can be moved to relax and tension the conveyor belt between the two elements.

In one example, the two groups of U-shaped elements are arranged parallel to each other and two inner U-shaped elements of the two groups can move towards each other and towards the other two outer U-shaped elements, thus opening and closing the bottom surface of the gripper frame.

In an example, the four U-shaped elements are arranged parallel along the longitudinal direction of the gripper.

In an example, the four U-shaped elements are arranged parallel across the transverse direction of the gripper.

In an example, one or more of the side walls of the frame are closed.

In an example, one or all side walls and the bottom side of the frame are closed and a whole side wall of which is open, or a part thereof is provided with an opening near the bottom side of the frame, which side wall or part thereof can be closed with the conveyor belt.

In an example, one or all side walls of the frame are closed and the underside of which is open, or part of the underside is open, which underside or part thereof can be closed with the conveyor belt.

In an example, the side walls are made of stainless steel.

In an example, the frame is provided with a magnetic coupling piece at the top for magnetically and preferably also form-locked coupling of the gripper as end effector to the manipulator.

In an example, the gripper is furthermore provided on one or more side walls with a manipulation strip which is arranged over the entire width of the side surface and is provided with one or more magnets for fixing the side wall and keeping it in position.

In an example, the gripper is further provided with a manipulation strip on one, two or more side walls, to which ends of the conveyor belt are attached, the manipulation strip comprising one or more magnets for magnetic coupling thereof to the actuator for displacing objects in the side surface. the manipulation strip so that the conveyor belt attached thereto is pulled over a side surface and/or a bottom surface, respectively, of the frame for opening and closing of the side surface and the bottom surface, respectively.

In an example, the gripper comprises a plurality of needles, which are arranged in a matrix arrangement and are movably received in a wall portion of the gripper, each of the needles being arranged to move in a longitudinal direction of the needle separately from the other needles. and is tapered at a first free end, and is provided at a second end with a blocking element for limiting the movement of the needles against the wall part of the gripper, and wherein the needles are adapted to be positioned in the plane of the frame where the conveyor belt can open and close the opening of the frame.

In another aspect not forming part of the claimed invention, there is provided a gripper for handling at least one food product such as meat, the gripper, comprising:
- a first actuator for driving a first conveyor belt, which first conveyor belt is provided with two, three or more openings, which openings are distributed staggered in a matrix over the conveyor belt;
- a second actuator for driving a second conveyor belt, which second conveyor belt is provided with two, three or more openings, which openings are distributed staggered in a matrix over the conveyor belt;
wherein the first and second conveyor belts are arranged perpendicular to each other and partly overlapping, so that within the overlapping part of the two conveyor belts a matrix of positions can be defined which can be opened separately by changing the position of the first and the second conveyor belt, respectively. controls for bringing the two, three or more openings of the first and second conveyor belt, respectively, into a desired position.

The invention will be further elucidated on the basis of non-limiting examples shown in the figures. The figures show in:
Figure 1 shows a device according to a first embodiment;
Figure 2 shows an arrangement for separating and packaging food products;
Figures 3 and 4 show a device according to an embodiment, in single and quadruple arrangement from two different perspectives;
Figures 5 and 6 show a device according to an embodiment, in single and quadruple arrangement;
Figures 7 and 8 show a device according to an embodiment, with details of the drum and further manipulation means;
Figures 9a-9d show a device according to an embodiment, in various stages of manipulating products;
Figures 10a-b, a device according to an embodiment, in various stages of manipulating products from other views.
Figures 11a-b, a device according to an embodiment for manipulating products.

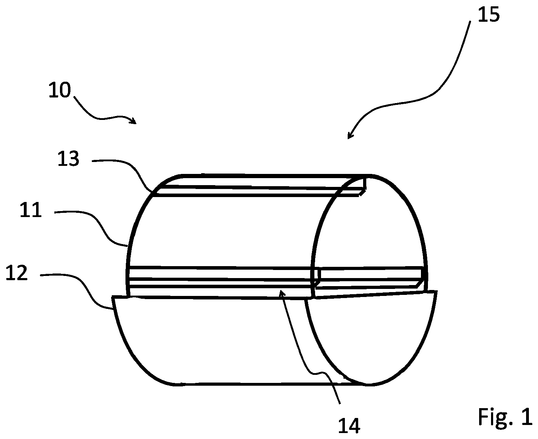

Figure 1 shows a device 10 for separating food products supplied in bulk. These can be sausages, but also hamburgers, vegetables or other products and these can be supplied cooked, partially prepared, raw, fresh or frozen. The device 10 is designed to separate these products, which means that the products can be supplied in bulk at a first input side 15. This bulk means that the products are in multiples and, moreover, it is not required that the products are ordered. This supply can therefore also concern a deposit of, for example, a container or silo of products.

The present description also provides for such a bulk supply a device consisting of a cylinder provided with a housing that is completely closed or perforated with such a perforation that the products to be kept in bulk do not fall out. This means that the perforations are small, for example smaller than 1 cm. The cylinder is therefore completely closed except at the top, where it is completely open. The cylinder has a movable bottom that is provided with an actuator on the outside with which the bottom can be moved and the products are pushed out of the cylinder by raising the bottom. This cylinder can therefore be filled like a bucket or container or cartridge and taken to the singulator. There the cylinder is emptied by first placing the cylinder at an angle whereby the cylinder is brought from a vertical orientation to a partially horizontal orientation, which means that it is tilted at least substantially 45 degrees from the upright position. The products are then pushed out of the cylinder because the bottom is raised by means of the actuator. The products then fall in small quantities or even piece by piece into the drum 11, 12 of the singulator 10. The cylinder that provides the bulk supply can also be provided with omniwheels, which means that both forward movements and rotation and thus sideways can be controlled. moved without turning the wheels into position. Preferably, the cylinder is provided with four omniwheels, which are arranged at each corner under the cylinder, and in which it is further provided with a power supply such as a battery or accumulator and a drive unit for controlling the actuator, the tilting of the cylinder and the movable soil. The cylinder can therefore be used as a robot and can be programmed to automatically move from one place to another along predetermined paths, thus automatically supplying the singulator with a bulk of food products. However, the robot can also move to the singulator in a different way because it is, for example, equipped with a camera system that looks at the floor and/or the ceiling and can orient itself in this way, because the recorded images are compared with a map stored in a memory with such information. recordings and associated location positions. The robot can thus recognize certain properties of the floor and/or ceiling and thus know where it is located and thus in which direction it must move in order to reach the singulator.

The singulator according to the present description has various embodiments or appearances, but always comprises a housing and a drum present therein. The housing partially closes the drum at the bottom and the drum is fully or partially open so that products are held in the drum at the closed parts of the housing but can fall out of the drum or be introduced into parts of the housing that are be open, such as at the front or at the top as shown in Fig. 1.

The embodiment of the singulator 10 of FIG. 1 thus consists of a drum 11 of cylindrical shape which has a horizontal orientation, that is to say the circumferential wall is horizontal and the two bases are vertical, and further consists of a housing 12 which is half-opened and cylindrical in shape. The drum rotates about a horizontal axis of rotation and is provided on the inside with one or more gutters 13 extending at least substantially the entire length of the drum on the inside of a circumferential wall of the drum. as shown in fig. 1, are arranged in the drum, are arranged to pick up the products from the underside or bottom of the drum 11 and housing 12, where the products are present in bulk in the drum. The gutters have a width that at least substantially corresponds to the width of the food products to be separated, so that these products simply remain lying in the gutters and are thus carried along by the drum during its rotation. Because the drum 11 is closed by the housing 12 for the first 90 degrees of rotation, the products there cannot yet fall out of the housing, but as soon as that point has been turned and the housing there is open, the products can fall out of the gutters because they are preferably formed as such for this purpose, which means that these gutters are, for example, L-shaped, with the upright edge on the inside, but no upright edge on the outside of the drum, which keeps the products inside the drum. These are then only bounded by the wall of the housing 12, and as soon as there is no more wall, or there is an opening in said wall 12, the products can leave the drum and be separated as such. In the context of the present description, singulation is understood to mean that the products from the bulk in the bottom of the drum are ejected from the drum in single or in a few pieces for further processing. This can, for example, also be two or three frikandels that lie behind each other in the gutter.

It should be emphasized that the singulator shown is only a schematic representation of a singifier according to one of the examples of the present description. This is because the singulator can also have a different orientation, in which the housing is completely closed and the bottom and top, or the two base surfaces, are open. In this embodiment, the products are preferably poured into the drum at one of the two ends and the products are lifted in single or limited numbers into the gutters by rotation of the drum, where they are pushed out of the gutter by an actuator, or pulled out of the gutter via a grab. Finally, the gutters can also be arranged in the drum as vanes, which means that baffles are arranged in the drum which extend radially outwards from the central axis of rotation and which are provided with the gutters at the end thereof for the pressing the food products out of the housing.

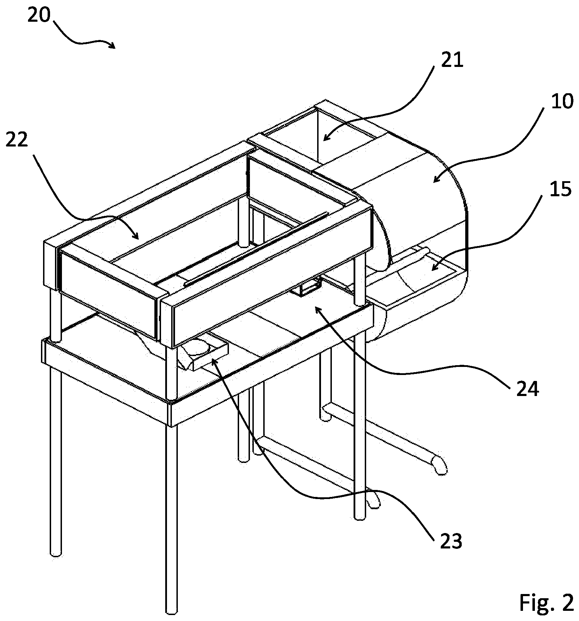

Figure 2 shows an embodiment of an industrial setup 20 of the singulator 10 with various components. The industrial set-up comprises a singulator 10 which has an open feed 15 where products can be poured in bulk from the aforementioned cylinder. The drum 15 of the singulator rotates and separates the bulk flow of products by pushing it out of the drum and placing it on a plate of a pusher 21. This has movable walls that press the products onto a plate 24 for further manipulation thereof by a manipulator or gripper 22. This gripper is not shown in this figure, but can occur in various variants. The gripper can for instance be a gripper which is included in an intersection of four guiding axes, the axes in pairs being perpendicular to each other and being held in place by means of magnets at the ends by a magnet present in the magnetic wall 22. This magnet can be changed in position in that it can be moved in position in the wall part 22 by drive belts or the like. To this end, the magnet is, for example, mounted on a drive belt or band which moves in a direction across the inside of the wall by a motor and thus carries along the magnet fitted on the other side and thus also the rod attached to it and thus the gripper that is positioned in the cross plane. is included.

It will be clear to the skilled person that other variants of grippers can also be used here and that the singulator in this industrial setup can also cooperate with other such grippers. Examples thereof are variants in which such above-mentioned magnetic transmissions are used in which the movable magnets are not mounted in the magnetic wall 22 as shown in Figs. 2, but in the bottom plate 24 in order to move the products there with a gripper with magnets accommodated on this plate.

Finally, in each embodiment the gripper can also be provided with a further drive unit with which the gripper can be adjusted in height so as not only to enable manipulation in the plane of the bottom plate 24, but also to lift the products and place them in, for instance, a container. 23 to place. These and other variants of the grippers are available through the applicant of the present invention.

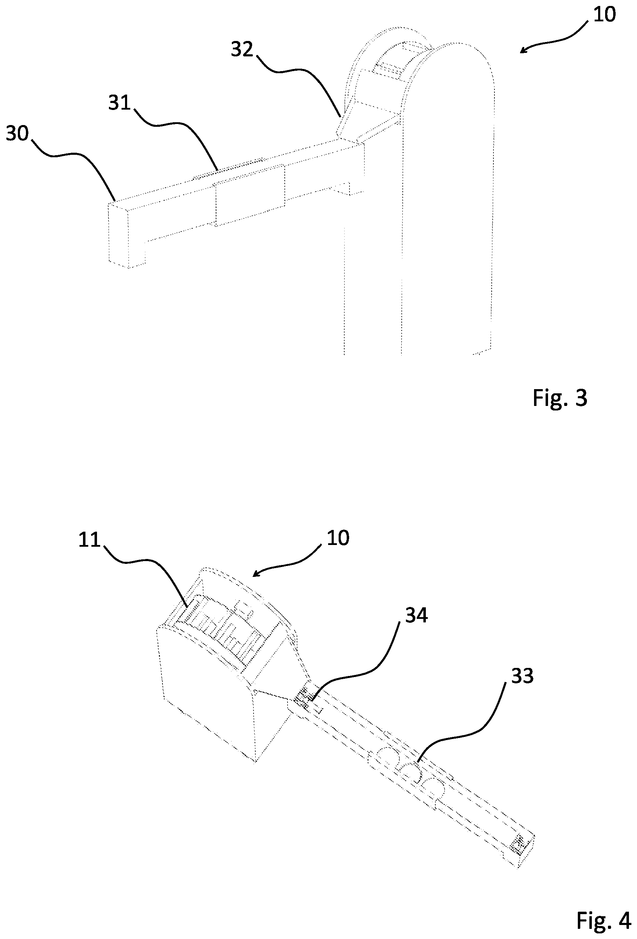

In FIG. 3 shows an embodiment of the device according to the present invention. This device 10 or singulator 10 is designed for singling food products supplied in bulk, such as pre-cooked sausages and the like. The singulator 10 comprises a drum 11, which can be seen in more detail in fig. 4, and which is arranged for rotation about a horizontally oriented axis of rotation. The drum is accessible from the top or front as shown in Fig. 4 can be seen. Bulk products can be deposited there.

The drum 11 is partly enclosed by a housing part which is circular and is closed at least at the bottom and is at least partly open for the bulk supply of the food products in the drum, the drum moreover comprising a plurality of on the inside of a circumferential wall of the drum over at least substantially the entire length of the drum extending gutters, which in fig. 4 can be seen clearly. Each of these gutters has a width which at least substantially corresponds to the width of the food products to be separated, so that the food products are ejected singularly from the gutters by rotation of the drum. This can be ejected from the drum via a discharge gutter 32 as shown in Figs. 3 and 4. The products then fall onto a pick-up 30, which may be a gutter or bin.

However, the products can also be blocked because a movable slide is slid in front of the drum, so that the products do not fall out of the drum 11 and into the gutter 32, but are rotated and therefore remain in the drum. The products fall from the discharge gutter 32, provided they do not continue to rotate through the slide, into a gutter or bin 30 where they are pushed further into the gutter, bin or track 30 by an extendable manipulator 34 and thus away from the singulator 10. This makes sense in Fig. 4 where the products 33 have already been pushed to a further ejection unit 31. This consists of a number of openings that are made in the track 30 or gutter 30 and that correspond to the shape and diameter of the products 33 to be singulated. In this case, the holes are therefore slightly larger than the burgers 33 that are transported and singulated here. The products 33 do not yet fall directly through the holes because there is a slidable shutter 31 around it that keeps the holes closed so that they actually become blind holes. However, the valve 31 is slidable and can be slid back and forth along the longitudinal direction of the gutter 30. As a result, the holes can be opened and the products can fall out of the gutter.

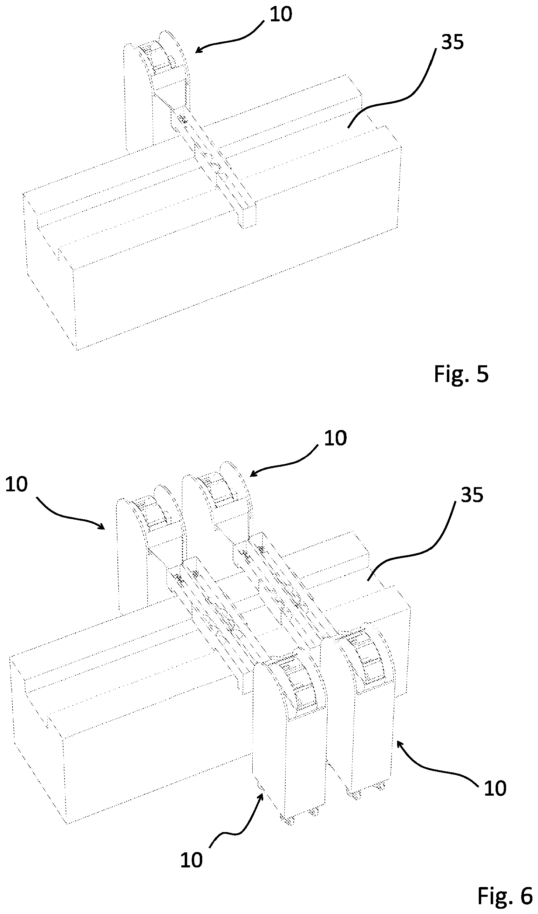

In FIG. 5 and 6, two different arrangements of the manipulator or singulator 10 according to the invention are shown. In FIG. 5, there is a single scout or manipulator 10 or robot 10, while in FIG. 6 four are included that are placed in pairs.

The products such as sausages or hamburgers can be singulated with the drum 10 from bulk to a few pieces and over the gutter 30 to above, for example, a supply 35 of a vacuum packer or foil packer (not shown). By correctly controlling the slide or ejection unit 31, the products can then be poured into the supply 35 of the packer at the correct position.

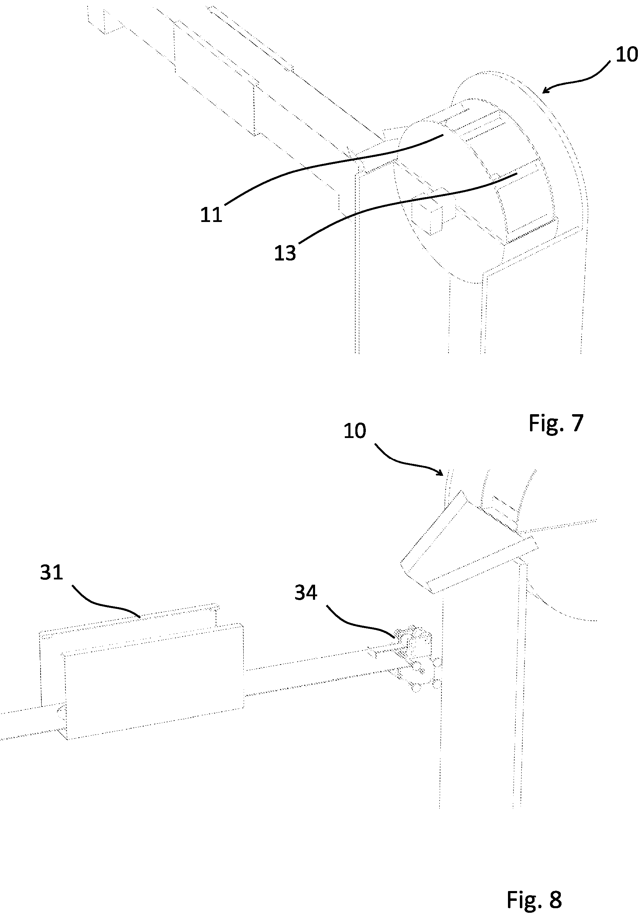

In FIG. 7 the separator 10 is shown which has been worked open so that it is clearer to see which parts are included therein. The figure shows the drum 11 and the vanes or also referred to as the gutters 13 of the drum. These extend partly or wholly over the width of the drum, as can be clearly seen in the figure, and therefore correspond in shape and configuration to a paddle wheel or Ferris wheel.

In FIG. 8 shows more detail of the discharge gutter of the singulator 10 and the extendable manipulator 34 or roller gripper 34. This concerns a robot or manipulator which comprises a roll of bendable metal similar to a tape measurer, and which is adapted to extend this metal strip and retract so that products on the gutter can be pushed towards ejection unit 31.

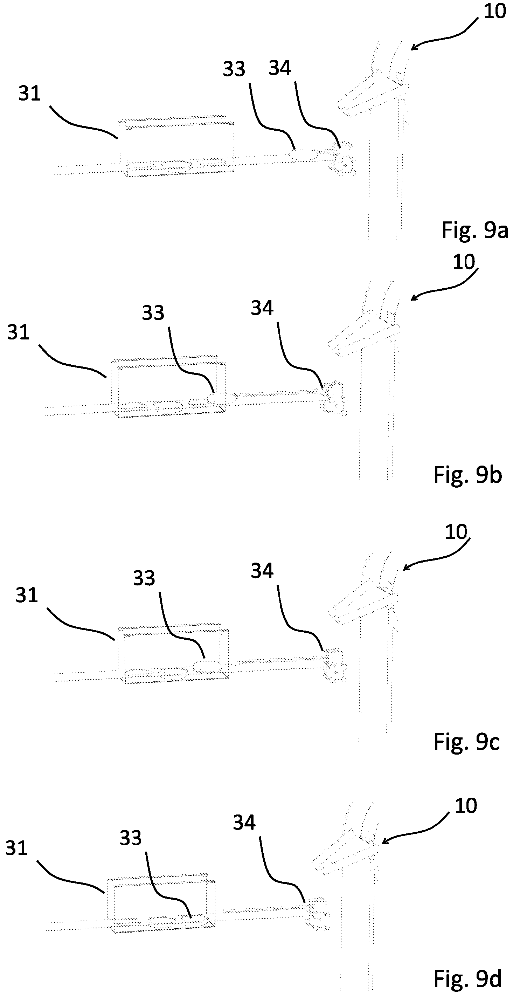

In FIG. 9a-d are shown various stages of the products on the gutter and how they are pushed over the gutter towards the ejection unit 31 by the roller gripper 34 or the extendable manipulator 34 . In FIG. 9a the product has just fallen out of the gutter, onto the gutter and in fig. 9b, the product 33 is pushed towards the holes of the ejector unit 31. Once the product is in one of the holes, as shown in Fig. 9c, the ejection unit can move and open the hole so that the product 33 or products fall from the gutter onto an underlying conveyor belt or other means for further transport or manipulation.

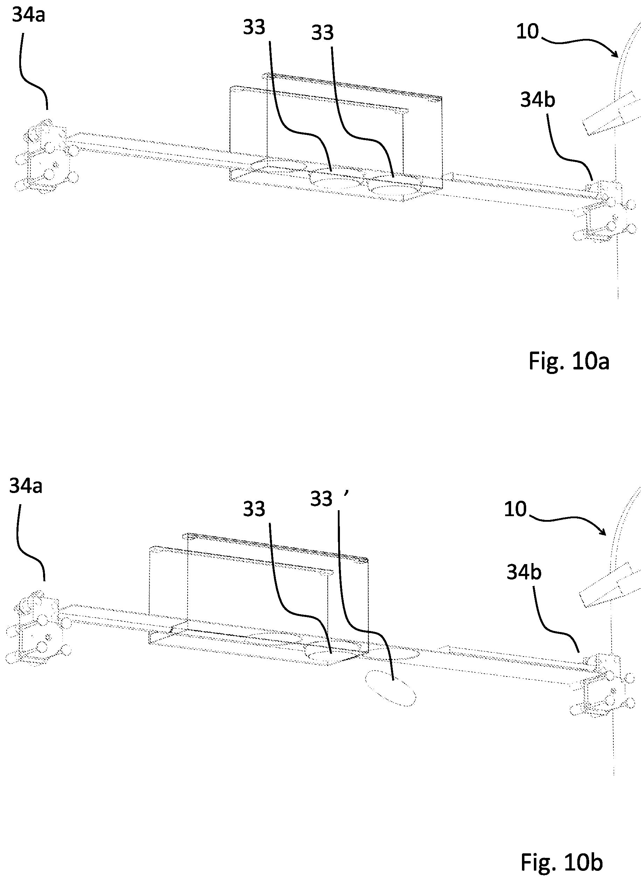

In FIG. 10a-b these steps are shown again, but then from the bottom in which in fig. 10b it can clearly be seen that the product 33' falls out of the hole through the gutter after it has been pushed into the hole by one of the roller grippers 34a, 34b.

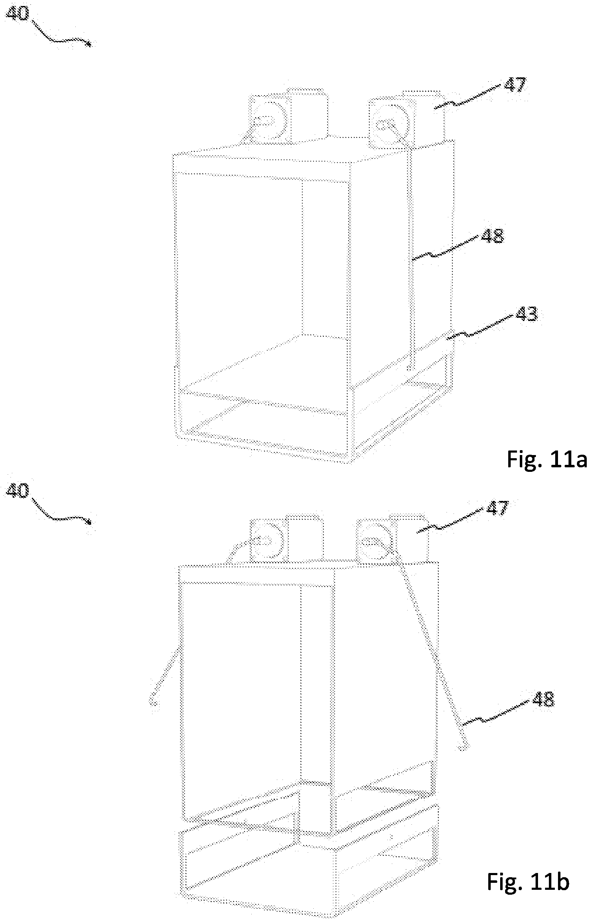

In FIG. 11a and 11b, there is shown another embodiment of a gripper 40 in accordance with an aspect of the present disclosure. The gripper 40 is designed for manipulating at least one food product such as meat, the gripper 40 which is designed for attachment as an end effector to a manipulator such as a robot arm, for instance at the top as shown in Figs. 11a and 11b.

The gripper comprises:
- a framework adapted to be placed over the at least one food product,
- an actuator 47 for driving 48 a conveyor belt 43, the conveyor belt being arranged at least on one of the faces of the frame for closing and opening the at least one face by activating the actuator.

The gripper 40 is designed for manipulating one or more food products, which includes all types of prepared, partially prepared or raw meat, vegetables or other types of food products. This embodiment may include all of the aforementioned features and examples of the other aforementioned embodiments. These products can be fresh, raw, but also frozen and the device 40 is equipped with the gripper for manipulation thereof, which means that the products can be picked up and thus lifted, rotated and moved.

The gripper shown is designed to enclose products from above. At the bottom there is a mat or other flexible element that functions as the bottom of the gripper. The mat is movable and can be pushed away via the side walls. The gripper is ideally suited for placing a product in a (deep) packaging. In combination with the singulator, a bulk supply of products can be singulated in a simple and efficient manner by the singulator, which are then loaded into the gripper at the open side (under 43). This can be done one by one, which means that the gripper first puts away a single product in a package, or per predetermined number of products. This means that the products from the singulator are first loaded into the gripper and then placed in the packaging as a group. Loading can be done through the open side, and putting away by removing the bottom formed by the mat.

## Claims

1. Device for singulating food products which are supplied in bulk, such as pre-cooked sausages, comprising:
- a drum (11) arranged for rotation about a horizontally oriented axis of rotation;
- a housing (12) for partially enclosing the drum (11), which housing (12) is circular and is closed at least at the bottom and is at least partly open for feeding the food products (33) in bulk into the drum (11), the drum (11) further comprising,
- a plurality of gutters (13) extending on the inside of a circumferential wall of the drum (11) over at least substantially the entire length of the drum (11), wherein each of the gutters (13) has a width which at least substantially corresponds to the width of the food products (33) to be separated, for ejecting the singulated food products (33) out of the gutters (13) through rotation of the drum (11),
**characterized in that**,
- the device is arranged to eject the food products (33) from the housing (12) in a direction transverse to the longitudinal direction of the gutters (33) at a position where a wall of the housing (12) ends or is partially open; or
- the device comprises one or more actuators adapted to actively push the food products (33) out of the gutters (13) in the longitudinal direction of the drum (11).

2. Device according to claim 1, wherein the gutters (13) are arranged to rotate about a longitudinal axis relative to the drum (11).

3. Device according to any of the preceding claims, wherein the housing (12) is completely open on one base of the cylindrical housing for receiving the food products (33) supplied in bulk, on the other base of the cylindrical housing is open for singular ejection of the food products (33) in line with the longitudinal direction of the gutters (13).

4. Device according to claim 3, further comprising an actuator which is adapted to actively push the singulated food products (33) out of the gutters (13).

5. Device according to claim 4, wherein the drum (11) is arranged to periodically pause the rotation, during which pause the actuator can push the singulated food products (33) out of one of the gutters (13).

6. Device according to claim 5, wherein the actuator is arranged to push the singulated food products (33) out of the gutter (13) with a linear movement in line with the longitudinal direction of the gutter (13).

7. Device according to claim 5 or 6, wherein the drum (11) comprises a number of actuators corresponding to the number of gutters (13), the actuators being part of the gutter (13) and arranged to rotate with the drum (11) about the axis of rotation, and the actuators are arranged to push the singulated food products (33) out of the gutter (13) with a linear movement, in line with the longitudinal direction of the gutter (13).

8. Device according to any one of the preceding claims, wherein the drum (11) is provided with three gutters (13) extending over the length of the drum (11) on the inside of a wall of the drum (11).

9. Device according to any of the preceding claims, the housing (12) further comprising a shielding element movable relative to the housing (12), which shielding element can be slid in front of an ejection opening of the housing (12) for blocking the ejection of the separated food products (33) from the gutter (13).

## Patentansprüche

1. Vorrichtung zum Vereinzelnen von in loser Schüttung zugeführten Lebensmitteln, wie vorgegarten Würstchen, umfassend:
- eine Trommel (11), die zur Rotation um eine horizontal ausgerichtete Rotationsachse angeordnet ist;
- ein Gehäuse (12) zum teilweisen Umhüllen der Trommel (11), wobei das Gehäuse (12) kreisförmig ist und zumindest an der Unterseite geschlossen ist und zumindest teilweise offen ist, um die in loser Schüttung zugeführten Lebensmittel (33) in die Trommel (11) einzuspeisen;
wobei die Trommel (11) ferner umfasst:
- eine Mehrzahl von Rinnen (13), die sich an der Innenseite einer Umfangswand der Trommel (11) über mindestens im Wesentlichen die gesamte Länge der Trommel (11) erstrecken, wobei jede der Rinnen (13) eine Breite aufweist, die im Wesentlichen der Breite der zu trennenden Lebensmittel (33) entspricht, um die vereinzelt vorliegenden Lebensmittel (33) durch Rotation der Trommel (11) aus den Rinnen (13) auszustoßen,
**dadurch gekennzeichnet, dass**
- die Vorrichtung so ausgebildet ist, dass sie die Lebensmittel (33) aus dem Gehäuse (12) in einer Richtung quer zur Längsrichtung der Rinnen (13) an einer Stelle ausstößt, an der eine Wand des Gehäuses (12) endet oder teilweise offen ist; oder
- die Vorrichtung ein oder mehrere Aktuatoren umfasst, die dazu ausgelegt sind, die Lebensmittel (33) aktiv in Längsrichtung der Trommel (11) aus den Rinnen (13) auszuschieben.

2. Vorrichtung nach Anspruch 1, wobei die Rinnen (13) relativ zur Trommel (11) um eine Längsachse drehbar angeordnet sind.

3. Vorrichtung nach einem der vorhergehenden Ansprüche, wobei das Gehäuse (12) an einer Stirnseite des zylindrischen Gehäuses vollständig offen ist, um die in loser Schüttung zugeführten Lebensmittel (33) aufzunehmen, und an der anderen Stirnseite offen ist, um die vereinzelt ausgebrachten Lebensmittel (33) in Richtung der Längsachse der Rinnen (13) auszustoßen.

4. Vorrichtung nach Anspruch 3, ferner umfassend einen Aktuator, der dazu ausgelegt ist, die vereinzelt vorliegenden Lebensmittel (33) aktiv aus den Rinnen (13) auszuschieben.

5. Vorrichtung nach Anspruch 4, wobei die Trommel (11) so ausgebildet ist, dass sie die Rotation periodisch anhält, während welcher Pause der Aktuator die vereinzelt vorliegenden Lebensmittel (33) aus einer der Rinnen (13) ausstoßen kann.

6. Vorrichtung nach Anspruch 5, wobei der Aktuator so ausgebildet ist, dass er die vereinzelt vorliegenden Lebensmittel (33) mit einer linearen Bewegung entlang der Längsrichtung der Rinne (13) ausschiebt.

7. Vorrichtung nach Anspruch 5 oder 6, wobei die Trommel (11) eine Anzahl von Aktuatoren aufweist, die der Anzahl der Rinnen (13) entspricht, wobei die Aktuatoren Teil der Rinnen (13) sind und mit der Trommel (11) um die Rotationsachse rotieren, und wobei die Aktuatoren so ausgebildet sind, dass sie die vereinzelt vorliegenden Lebensmittel (33) mit einer linearen Bewegung entlang der Längsrichtung der Rinne (13) ausschieben.

8. Vorrichtung nach einem der vorhergehenden Ansprüche, wobei die Trommel (11) mit drei Rinnen (13) versehen ist, die sich über die Länge der Trommel (11) an der Innenseite einer Wand der Trommel (11) erstrecken.

9. Vorrichtung nach einem der vorhergehenden Ansprüche, wobei das Gehäuse (12) ferner ein relativ zu dem Gehäuse (12) bewegliches Abschirmelement umfasst, das vor eine Ausstoßöffnung des Gehäuses (12) verschoben werden kann, um den Ausstoß der getrennten Lebensmittel (33) aus der Rinne (13) zu blockieren.

## Revendications

1. Dispositif de séparation unitaire de produits alimentaires fournis en vrac, tels que des saucisses précuites, comprenant :
- un tambour (11) agencé pour tourner autour d'un axe de rotation orienté horizontalement ;
- un carter (12) entourant partiellement le tambour (11), ledit carter (12) étant circulaire et fermé au moins sur la partie inférieure, et au moins partiellement ouvert pour permettre l'introduction des produits alimentaires (33) en vrac dans le tambour (11) ; le tambour (11) comprenant en outre :
- une pluralité de goulottes (13) s'étendant à l'intérieur d'une paroi périphérique du tambour (11) sur au moins la quasi-totalité de la longueur du tambour (11), chaque goulotte (13) ayant une largeur correspondant au moins sensiblement à la largeur des produits alimentaires (33) à séparer, afin d'éjecter les produits alimentaires (33) séparés hors des goulottes (13) par la rotation du tambour (11),
**caractérisé en ce que**,
- le dispositif est conçu pour éjecter les produits alimentaires (33) hors du carter (12) dans une direction transversale à la direction longitudinale des goulottes (13), à un endroit où une paroi du carter (12) se termine ou est partiellement ouverte ; ou bien
- le dispositif comprend un ou plusieurs actionneurs adaptés pour pousser activement les produits alimentaires (33) hors des goulottes (13) dans la direction longitudinale du tambour (11).

2. Dispositif selon la revendication 1, dans lequel les goulottes (13) sont montées rotatives autour d'un axe longitudinal par rapport au tambour (11).

3. Dispositif selon l'une quelconque des revendications précédentes, dans lequel le carter (12) est complètement ouvert sur une base du carter cylindrique pour recevoir les produits alimentaires (33) fournis en vrac, et est ouvert sur l'autre base pour l'éjection unitaire des produits alimentaires (33) dans la direction longitudinale des goulottes (13).

4. Dispositif selon la revendication 3, comprenant en outre un actionneur adapté pour pousser activement les produits alimentaires (33) séparés hors des goulottes (13).

5. Dispositif selon la revendication 4, dans lequel le tambour (11) est agencé pour interrompre périodiquement la rotation, pendant laquelle interruption l'actionneur peut pousser les produits alimentaires (33) séparés hors de l'une des goulottes (13).

6. Dispositif selon la revendication 5, dans lequel l'actionneur est conçu pour pousser les produits alimentaires (33) séparés hors de la goulotte (13) par un mouvement linéaire dans la direction longitudinale de la goulotte (13).

7. Dispositif selon la revendication 5 ou 6, dans lequel le tambour (11) comprend un nombre d'actionneurs correspondant au nombre de goulottes (13), lesdits actionneurs faisant partie des goulottes (13) et étant disposés pour tourner avec le tambour (11) autour de l'axe de rotation, et les actionneurs étant conçus pour pousser les produits alimentaires (33) séparés hors de la goulotte (13) par un mouvement linéaire dans la direction longitudinale de la goulotte (13).

8. Dispositif selon l'une quelconque des revendications précédentes, dans lequel le tambour (11) comprend trois goulottes (13) s'étendant sur la longueur du tambour (11) à l'intérieur d'une paroi du tambour (11).

9. Dispositif selon l'une quelconque des revendications précédentes, dans lequel le carter (12) comprend en outre un élément d'obturation mobile par rapport au carter (12), lequel élément d'obturation peut être déplacé devant une ouverture d'éjection du carter (12) afin de bloquer l'éjection des produits alimentaires (33) séparés hors de la goulotte (13).
